# EUROPEAN PATENT SPECIFICATION

(11) **EP 0 766 912 B1**
(45) Date of publication and mention of the grant of the patent: **27.06.2001**
(21) Application number: 96202740.5
(22) Date of filing: 01.10.1996
(51) Int. Cl.: A01F 15/14, A01F 15/07

(54) **Apparatus and method for wrapping round bales**
Maschine und Verfahren um Rundballen zu Umhüllen
Appareil et méthode pour envelopper des balles rondes

(30) Priority: 02.10.1995 US 537019; 02.10.1995 US 538107; 02.10.1995 US 538112
(43) Date of publication of application: 09.04.1997
(73) Proprietor: NEW HOLLAND BELGIUM N.V., B-8210 Zedelgem (BE)
(72) Inventor: Underhill, Kenneth R., Strasburg, PA 17579 (US); Webb, Bryant F., Ephrata, PA 17522 (US)
(74) Representative: Vandenbroucke, Alberic

(56) References cited:
- FR-A- 2 597 122
- US-A- 5 231 828

## Description

This invention relates generally to apparatus and methods for making cylindrical bales of crop material. More particularly, this invention pertains to an apparatus and a method for wrapping crop material that has been formed into a cylindrical package in a round baler.

Prior art balers generally have a bale forming chamber defined by an apron comprising an array of side-by-side belts, transverse slats trained on chains, a plurality of rolls or a combination of these various elements, e.g., rolls and belts. Crop material, such as hay, is picked up from the ground as the baler traverses the field, fed into a fixed or variable chamber where it is accumulated and compressed to form a cylindrical package of crop material. The formed package, while in its compacted condition inside the chamber, is wrapped with net, plastic film, twine or the like, to produce a completed round bale that is then ejected from the chamber onto the ground for subsequent handling.

Exemplary of prior art round balers of the type referred to above having a fixed chamber, i.e., a bale forming chamber that does not vary in size, are the various balers disclosed in US-A-4,176,596, US-A-4,212,149 and US-A-4,599,844, each of which illustrates a different type of apron assembly. In US-A-4,176,596 a baler is disclosed in which the bale forming chamber is defined by a plurality of similar groups of side-by-side conveyor belts arranged around the periphery of the chamber. The conveyor may also comprise a pair of opposing chains between which a plurality of parallel crop engaging slats are mounted. The chamber in US-A-4,212,149 is defined by a continuous slatted conveyor in combination with a pair of floor rolls, in which an inner run of the conveyor is guided along a fixed path along a major portion of the periphery of the chamber. A third type of apron assembly, shown in US-A-4,599,844, consists of a plurality of adjacent rolls arranged transversely in a generally circular array to define a cylindrical chamber.

Various wrapping systems employ known wrapping materials, such as a continuous web of wrapping material or twine, to wrap compacted packages of crop material formed in round balers. For example, US-A-4,176,596 and US-A-4,212,149, mentioned above, refer to commonly accepted twine wrapping systems for completing bales formed in fixed chamber balers. In another patent, also directed to a fixed chamber round baler, where the chamber is defined by transverse slats mounted on chains, US-A-4,610,123, a net wrapping system is disclosed. In this baler the net is introduced into the fixed chamber via the transverse inlet through which crop material is fed. In still another fixed chamber baler patent, US-A-5,231,828, a wrapping system is disclosed in which net, twine or plastic can be separately applied to a completed cylindrical package via the crop inlet.

In the wrapping system disclosed in US-A-4,599,844, mentioned above, net is introduced into the forming chamber via a path between a pair of adjacent rolls in the circular array defining the chamber. Another example of this is illustrated in US-A-4,580,398.

Although twine wrapped bales are common and readily acceptable, many farmers prefer to use net for various reasons, e.g., less losses in certain crop conditions, a smoother outer surface on the completed bale which gives added protection against rain, and reduced field time for wrapping, due to the reduced number of revolutions of the completed package in comparison to twine wrapping. Regardless of the wrapping medium, in a fixed chamber baler, as in most variable chamber balers, initiation of the wrapping step is not commenced until a cylindrical package of crop material has been fully formed and compacted in the chamber, at which time the tail of the twine or net is introduced to the chamber between the forming elements of the apron or through the crop inlet. The twine or net is retained between the outer surface of the compacted cylindrical package of crop material and the apron, and due to frictional force the wrapping material encases or encircles the package as it continues to rotate in the chamber. Finally, the wrapping process is completed, the net or twine is severed, and a completed bale is discharged from the chamber.

In the past, problems have been encountered in attempts to consistently introduce wrapping material to the chamber. Especially in the case of net where a tail of material the width of the package is desirably introduced simultaneously and evenly across the entire width of the forming chamber for efficient and effective wrapping.

As mentioned above one of the principal advantages of net wrapping is the ability to reduce wrapping time. This is accomplished by limiting the number of revolutions of the completed package in the chamber during wrapping to 2 or 3, which is a significant contribution to reduction of the overall elapsed time in the bale forming process, as compared to twine where ten times that number would not be uncommon, depending on crop material and bale size.

However, a key to successful achievement of this important advantage is feeding an even tail into the chamber in a consistent and uniform fashion, and severing the net in a manner that enables subsequent wrapping to be initiated effectively.

In some crop conditions, achieving the time advantage, along with the other important advantages of net wrapped bales, is impacted by the necessity to wrap twine around a net wrapped bale to hold the net in place. This type of dual wrapping operation is especially prevalent when baling moist slippery crop material such as silage. In known apparatus, a common approach is the utilization of a subsequent, time consuming twine wrapping operation, i.e., additional revolutions of the completed bale either in the chamber or after discharge, requiring the attendant expenditure of time and effort.

An important object of the present invention is to provide an improved dual wrapping apparatus and method for use in a round baler, enhancing its ability to reduce time for yielding the ultimate product without affecting reliability, and to improve thereby overall performance.

According to one aspect of the present invention, there is provided a method for forming crop material into cylindrical bales, comprising the steps of:
feeding crop material into a bale forming chamber having a transverse inlet;
forming said crop material fed to said chamber through said inlet into a compacted cylindrical package in said chamber;
supplying continuous sheet of wrapping material, dispensing said sheet into said chamber, wrapping said sheet around the periphery of said cylindrical package to completely encase said compacted crop material; and
supplying twine, dispensing said twine into said chamber, wrapping said twine around the periphery of said cylindrical package of compacted crop material to form a round bale.

Said method is characterized in that, during at least a portion of said sheet dispensing step, twine is dispensed into said chamber concurrently with said sheet of wrapping material.

Advantageously, this method may comprise the step of cutting said sheet of wrapping material while the twine continues to be dispensed into the chamber, such that it is not required to interrupt the bale rotation before the dual wrapping operation is completed.

According to another aspect of the present invention, there is provided a round baler for forming crop material into cylindrical bales, said baler comprising:
a main frame including opposing side walls;
means defining a bale forming chamber with a transverse inlet, said defining means including an apron assembly comprising crop engaging means, disposed between said side walls;
means for feeding crop material to said chamber through said inlet whereby said crop material accumulated in said chamber is engaged by said crop engaging means to form said crop material into a compacted cylindrical package in said chamber;
a supply of continuous sheet of wrapping material;
a dispensing assembly, including insertion means, for selectively dispensing said sheet of wrapping material into said chamber for wrapping the periphery of said cylindrical package of crop material to form a round bale of crop material;
a supply of twine; and
a twine dispensing assembly for selectively dispensing said twine into said chamber for wrapping the periphery of said cylindrical package of crop material to form a round bale of crop material;
said round baler being characterized in that said twine dispensing assembly is operable to dispense twine into said chamber concurrently with said sheet of wrapping material.

The baler may also comprise means for severing the sheet material under conditions where said twine is being dispensed to the cylindrical package, such that it is not necessary to interrupt the bale rotation. By using a single cutting apparatus for both the sheet material and the twine the complexity of the severing means can be reduced substantially. The combination of a knife edge and a shear bar warrants an effective cutting action of the severing means, whatever the direction of movement of the knife edge. Severing the sheet material under conditions where the twine is being dispensed, may be accomplished by providing the shear bar with at least one indentation and using means for guiding the twine through said indentation.

The bale forming chamber may have a fixed, generally cylindrical shape and the baler may comprise means for supporting said apron assembly on said main frame and means for moving said crop engaging means along a path contiguous with at least a portion of the fixed periphery of said cylindrical chamber in order to engage the crop material fed into said chamber by the feeding means under conditions where said crop engaging means are moving along a portion of said periphery to engage said crop material and form it into a compacted cylindrical package when a sufficient amount of crop material has accumulated in said chamber. The insertion means of the dispensing assembly may include grasping means for transversely engaging said sheet of wrapping material. The baler further may comprise means for mounting said dispensing assembly on said main frame to pivot about a fixed pivot for moving said grasping means of said insertion means between a retracted position remote from said cylindrical chamber and an extended position adjacent said cylindrical chamber for dispensing said sheet of wrapping material between the peripheral surface of said compacted cylindrical package of crop material and said crop engaging means.

The foregoing and other objects, features and advantages of the invention will appear more fully hereinafter from a consideration of the detailed description which follows, in conjunction with the accompanying sheets of drawings wherein one principal embodiment of the invention embodied in a fixed chamber round baler is illustrated by way of example. It is to be expressly understood, however, that the drawings are for illustrative purposes and are not to be construed as defining the limits of the invention, e.g. the method according to the invention is readily adaptable to variable chamber round balers. In the following description and in the claims wrapping material referred to as 'sheet' is intended to include web material, such as net, as well as other wrapping materials having a substantial width, such as film or foil.

Figure 1 is a cutaway side elevational view of a round baler in which the present invention is carried out.

Figure 2 is another cutaway side elevational view and shows in enlarged form the wrapping portion of the round baler of Figure 1.

Figures 3-5 are side elevational views similar to Figure 2 in which the wrapping apparatus is shown in selected conditions during operation.

Figure 6 is a view taken along lines 3-3 in Figure 2.

Figures 7A-13A are diagrammatic side elevational views similar to Figure 2 in which the dual wrapping apparatus is illustrated by showing selected conditions during operation.

Figures 7B-13B are diagrammatic views similar to Figure 6 and corresponding to counterpart views shown in Figures 7A-13A.

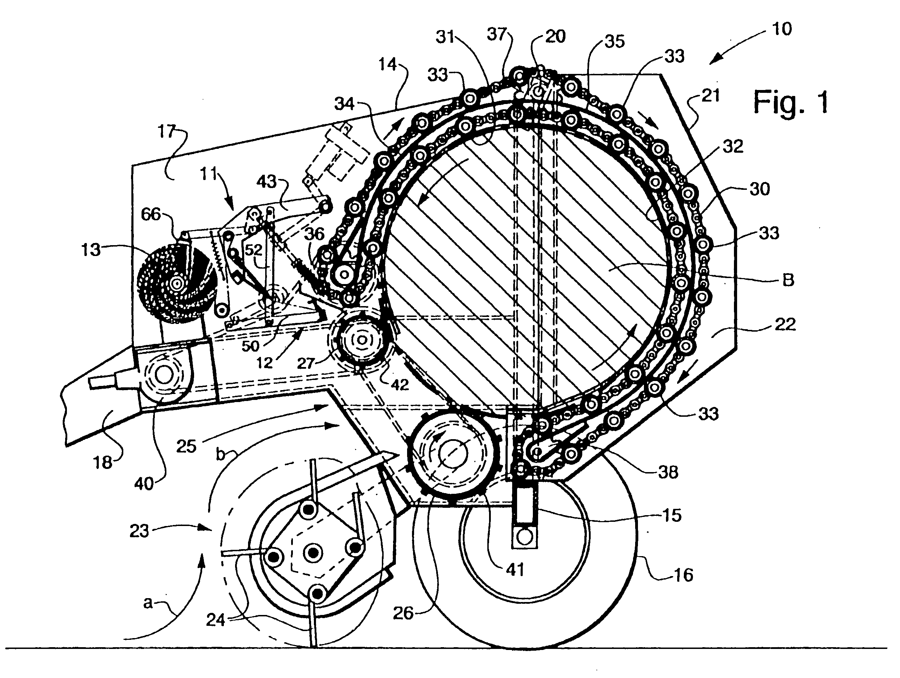

Referring now to the drawings for a more detailed description of the preferred embodiment of the invention, Figure 1 shows a fixed chamber round baler 10 of the type disclosed in US-A-4,212,149, discussed above. As will become apparent from the following description, the present invention is directed to improved apparatus and a method for wrapping a cylindrical package of crop material formed in a round baler, a typical example of which is baler 10. More particularly, the wrapping apparatus of baler 10 generally comprises a sheet wrapping assembly, such as net dispensing assembly 11, a twine dispensing assembly 9, and a severing assembly 12 for cutting sheet wrapping material, e.g. web material such as net, issued from a supply roll 13, and for cutting twine. Net and twine dispensing can be either separately or simultaneously carried out, as discussed below.

Round baler 10 includes a main frame 14 with a main support beam 15 on which a pair of wheels 16 (only one shown) is rotatably affixed. The main frame includes a pair of side walls 17, 17' between which a cylindrical bale forming chamber extends. For the purposes of clarity only one wall 17 is shown in Figures 1-5 and the elements mounted inwardly thereof are shown in full lines for clarity, which is an approach not uncommon in the descriptions in prior art patents. For illustrative purposes reference letter B is used to designate a bale, shown in cross section in the chamber.

Baler 10 also includes a tongue 18 extending from the forward portion of main frame 14 for conventional connection to a tractor. Pivotally connected to the sidewalls of main frame 14 by a pair of stub shafts 20 is tailgate 21 which may be closed, as shown throughout the drawings, during bale formation or pivoted open about stub shafts 20 to discharge a completed bale. The tailgate includes tailgate walls 22 coextensive with side walls 17. A pick-up assembly 23 mounted on main frame 14 in a suitable manner includes a plurality of fingers or tines 24 moveable in a predetermined path to lift crop material from the ground, generally depicted by direction arrow a, and deliver it rearwardly (arrow b) toward a transverse inlet 25 in the chamber defined by a floor roll 26 and a transverse stripper roll 27, both of which rolls are rotatably supported on main frame 14 between sidewalls 17.

The bale forming chamber is defined primarily by an apron assembly 28 comprising a pair of support chains 30 mounted to travel along a continuous path, the inner run of which is defined on sidewalls 17 and tailgate walls 22 by front and rear sections 31, 32 of a continuous chain guide track that separates at a point adjacent stub shafts 20 during bale discharge. The apron further comprises a plurality of parallel tubular crop engaging slats 33 extending between chains 30 to provide a cage-like periphery of the cylindrically shaped chamber. Radially outward of the inner run of apron assembly 28 are front and rear sections 34, 35 of a continuous cylindrical bale chamber wall. These sections, also separable during bale discharge are mounted between side walls 17 and tailgate walls 22, respectively, for maintaining integrity between the outer and inner runs of chain 30. Operatively engaged with chains 30 are drive sprockets 36 mounted between sidewalls 17, idler sprockets 37 also mounted between sidewalls 17 on shaft 20, and idler sprockets 38 mounted between tailgate walls 22. A conventional chain drive system for drive sprockets 36 is provided via appropriate coupling to gearbox 40 in a conventional manner, diagrammatically depicted in phantom outline outwardly of sidewall 17. The bale forming chamber is further defined by the outer conveying surfaces of floor roll 26 and stripper roll 27, both of which are driven in a clockwise direction by conventional drive means appropriately coupled to gear box 40. These rolls are provided with ribs 41, 42 to enhance their ability to convey crops in the chamber as a bale is being formed. Other forms of aggressive surface structure may be used to accommodate various types of crops and conditions.

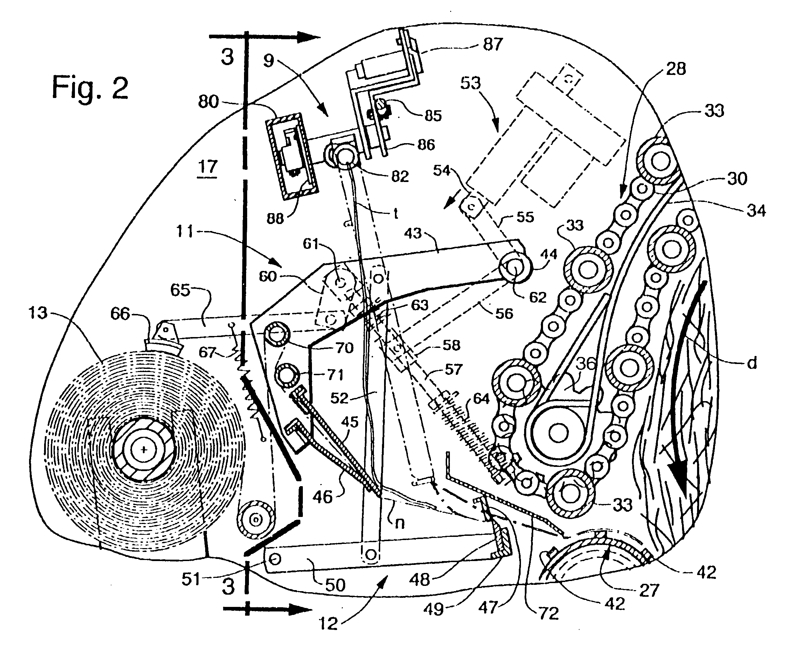

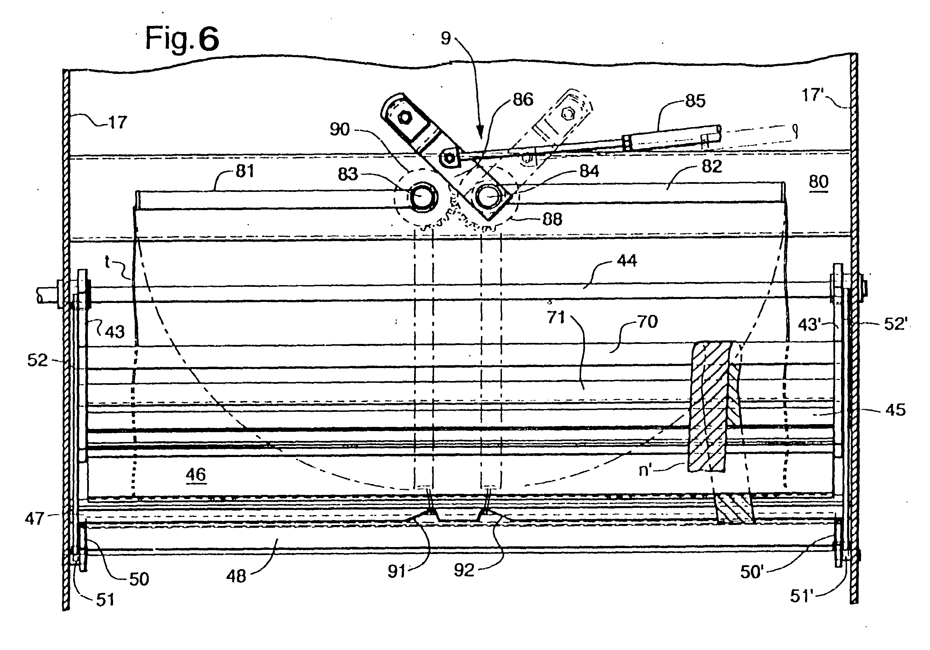

Now turning to Figures 2 and 6 for a more detailed description of the wrapping portion of baler 10 which comprises net dispensing assembly 11 shown in the fully retracted position, twine dispensing assembly 9 shown in its home position, and severing assembly 12. Net dispensing assembly 11 dispenses net n from net supply roll 13, twine dispensing assembly 9 dispenses twine t from a remote supply, and severing assembly 12 is adapted to severe such net and twine.

Net dispensing assembly 11 comprises a pair of parallel frame members 43, 43' (see Figure 6) fixedly secured to rotatably supported cross tube 44 that extends between sidewalls 17, 17' and upper and lower clamping members 45, 46, respectively, both of which have tips for grasping net n in a fashion that is clearly described in US-A-4,956,968, hereby incorporated by reference.

Severing assembly 12 comprises a shear bar 47 fixedly mounted between sidewalls 17, 17', and a transverse knife 48 affixed to a mounting member 49 extending between a pair of parallel knife support arms 50, 50' rotatably mounted at fixed pivots 51, 51' on the inside surface of sidewalls 17, 17'. Coupling links 52, 52' are pivotally attached at one end to dispensing assembly frame members 43, 43' and at its other end to knife support arms 50, 50'.

Mounted outboard of sidewall 17 is an electrical actuator assembly 53 (not shown in Figure 6) comprising means for reciprocally driving element 54, which is pivotally attached to one end of a link 55. It should be noted that the function of actuator assembly 53 could be accomplished equally as well with a hydraulic cylinder or other equivalent mechanisms. The other end of link 55 is fixedly attached to cross tube 44. Also fixedly attached to cross tube 44 is a link 56 which is coupled to rod 57 via a sliding yoke 58. Rod 57 has a freely swingable lower end that moves in response to the position of link 56 which determines the position of yoke 58 along its shank. Thus the upper end of rod 57, which is affixed to a leg 60, pivots about its pivot 61 in response to the swing of lever 56 about pivot 62. Cushioning springs 63, 64 absorb the impact of yoke 58 during the limits of its reciprocal traversal along rod 57.

Affixed to and pivoting with leg 60 is drag arm 65, to the outer end of which is attached drag shoe 66 held in contact with the outer surface of net supply roll 13 by spring 67. In a manner similar to that which is taught by US-A-5,243,806, hereby incorporated by reference, the net is issued from supply roll 13 along a path around idler roll 68 and spreader rolls 70, 71 and thence to clamping members 45, 46. This path is illustrated by net segment n', which is shown only in Figure 6 for diagrammatic purposes.

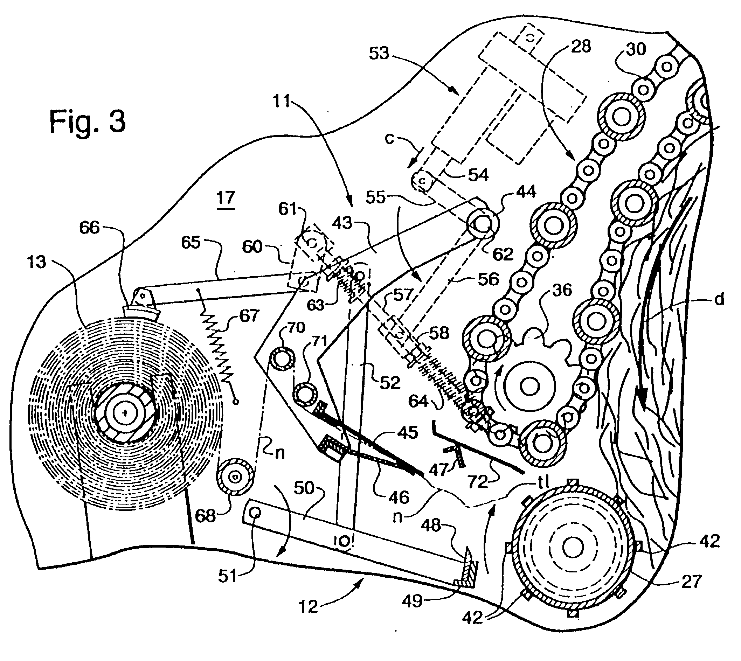

In operation net dispensing assembly 11 moves from the fully retracted position shown in Figures 1 and 2 to its intermediate position shown in Figure 3. This is achieved when actuator element 54 is thrust outwardly, as indicated by direction arrow c, which rotates frame members 43 counter clockwise, causing net severing assembly to rotate clockwise and release the end of the net from between knife 48 and shearbar 47 where it was being held (Figures 2 and 6) during the formation of a compacted cylindrical package in the chamber. Net tail tl is guided toward the insertion space between roll 27 and a shield element 72 as the compacted package of crop material rotates in the chamber in direction d past such space. Element 72 comprises a rigid sheet of material extending between sidewalls 17 to shield apron 28 which is moving away from the chamber. The passage of ribs 42 on roll 27 past the opening between roll 27 and shield 72 creates air currents that tends to pull tail tl toward the chamber which causes a fluttering effect in the net, illustrated by the generally extended position of the limp end of the net n depicted in Figure 3. This enhances the initiation of net wrapping.

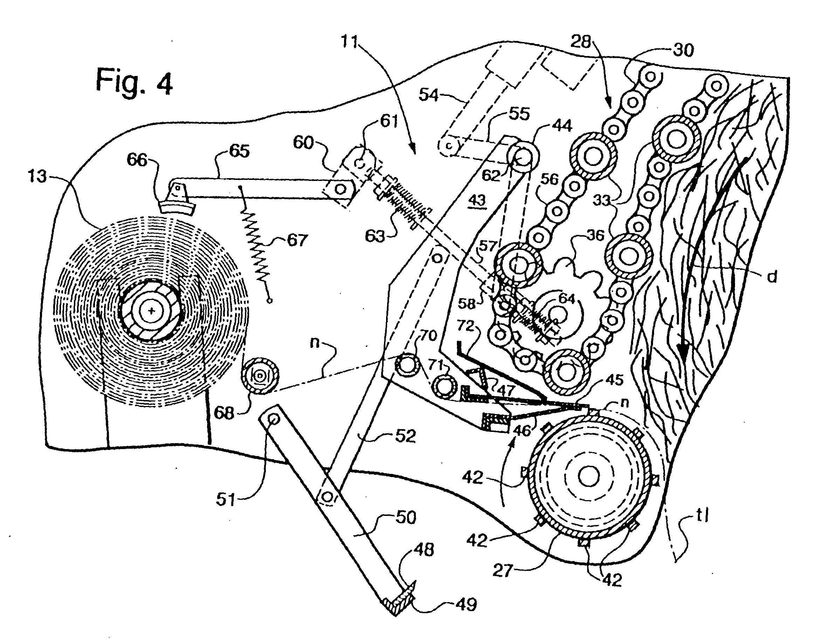

Figure 4 shows the dispensing assembly in the fully extended position during wrapping. Drag shoe 66 has been released to allow net to be freely issued, i.e., shoe is not in contact with the surface of net supply roll 13. In the event some drag is desirable during wrapping this shoe can be adjusted for varying frictional engagement. When the tail tl engages the surface of the cylindrical package, it is pulled to the nip formed by the roll 27 and the rotating package and thence dragged around periphery to envelope the cylindrical package of crop material in a known manner. Even without the flutter phenomena, tail tl of net n is positively inserted to the vicinity of the nip mentioned above under conditions where the dispensing assembly reaches its fully extended position shown in Figure 4 to start the wrapping sequence, i.e., net is pulled from the supply roll 13 and dispensed to the chamber.

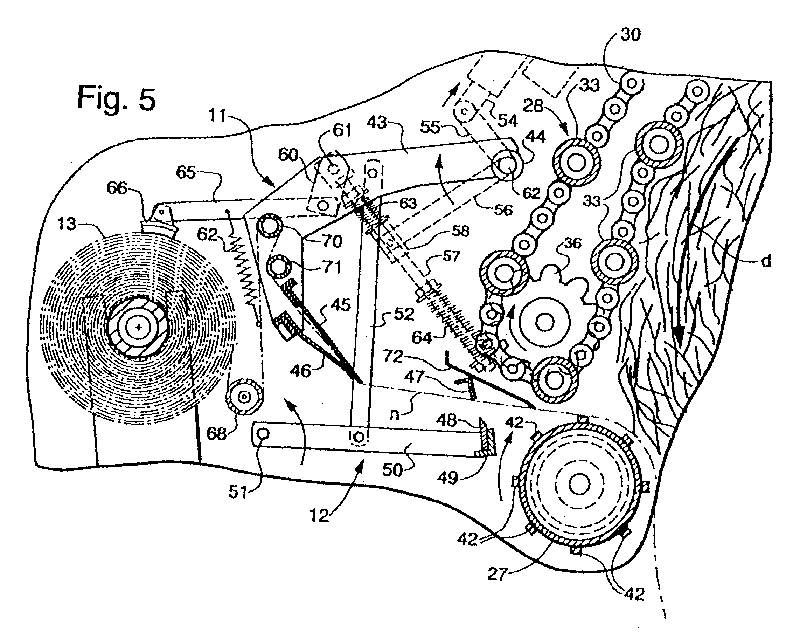

After 2 or 3 wraps (or more, if desired) have been applied in this fashion, dispensing assembly 11 is withdrawn via an intermediate position (Figure 5) by retraction of actuator element 54 causing frame members 43 to rotate clockwise, which in turn pulls severing assembly upwardly toward net n being dispensed along a path adjacent to shearbar 47. When the fully retracted position of Figures 1 and 2 is attained net n is severed by knife 48 which holds the end of the net tail tl against shear bar 47 until the next wrapping operation is initiated.

Referring again to Figures 2 and 6, twine dispensing assembly 9 is best described by referring to US-A-5,184,545, which discloses a twine dispensing assembly of the type generally referred to by reference numeral 9 and shown mounted on a frame member 80 between sidewalls 17, 17'. The assembly includes a pair of twine arms 81, 82 shown in their home position with twine tails dangling from the ends thereof. Twine arm 81 affixed to shaft 83 is driven in a counter clockwise direction and twine arm 82 affixed to shaft 84 is driven in a clockwise direction when drive arm 85 urges the driven link 86 to the position shown in phantom outline. The downwardly extending position of twine arms 81, 82 are shown in phantom outline in the extremity of their arcuate paths. This position corresponds to the phantom position of drive arm 85 and driven link 86. A break away mechanism 87 is used for providing protection in the usual manner. The identical arcuate paths generated by the twine dispensing ends of the twine arms are maintained by the coupling between drive gear 88 and driven gear 90, both of which are affixed to associated twine arm shafts, 84, 83, respectively.

By employing appropriate electronic controls, the net and the twine dispensing assemblies may be adapted to independently cooperate separately or sequentially with severing assembly 12, which operation will become apparent in the descriptive material below. By appropriate sequencing the twine and net are dispensed concurrently for the purpose of carrying out the present invention.

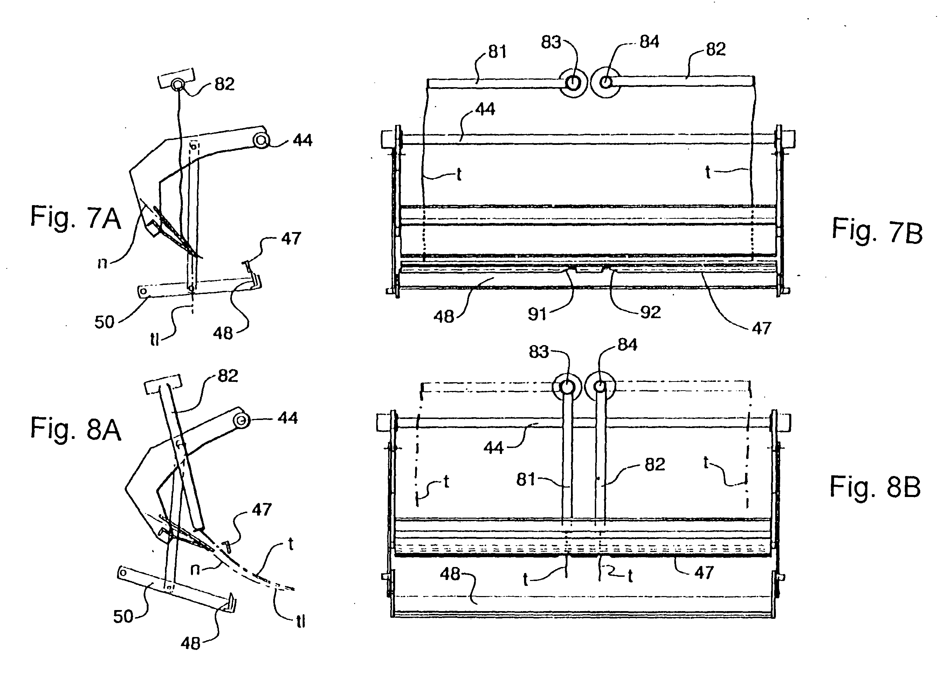

Now turning first to such concurrent dispensing operation, net dispensing assembly 11, with tl draped downwardly, moves from the fully retracted position shown in Figures 1, 2, 7A and 7B to its intermediate position shown in Figures 8A and 8B, whereupon net tail tl is likely to be drawn toward roll 27, due to air currents established by ribs 42. This is achieved when actuator element 54 is thrust outwardly, as described above, which rotates frame members 43 counter clockwise, causing net severing assembly to rotate clockwise and release the end of the net from between knife 48 and shearbar 47, if it has been held (Figures 2 and 6) during the formation of a compacted cylindrical package in the chamber. It should be noted, as mentioned above, that tail tl may drape downwardly as shown in Figure 7A. Regardless of its starting position, net tail tl is guided and in some instances drawn toward the insertion space between roll 27 and shield element 72 as the compacted package of crop material rotates in the chamber in direction d past such space. Concurrently, twine arms 81, 82 rotate to the down position with dispensing ends adjacent notches 91, 92 in shearbar 72 to permit twines t to become operatively associated with net n as it approaches the chamber.

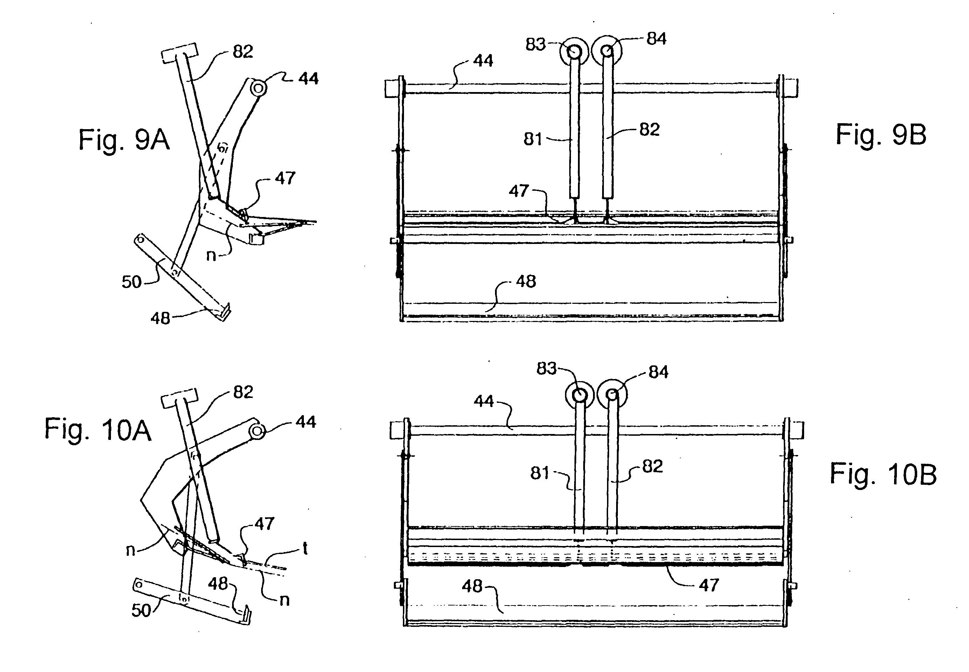

Figures 9A and 9B show net dispensing assembly 11 in the fully extended position during wrapping, and twine t being fed to the central portion of the chamber through notches 91, 92. When tail tl and twines t engage the surface of the cylindrical package they are pulled to the nip formed by the roll and the rotating package and thence dragged around its periphery to concurrently encircle the cylindrical package of crop material.

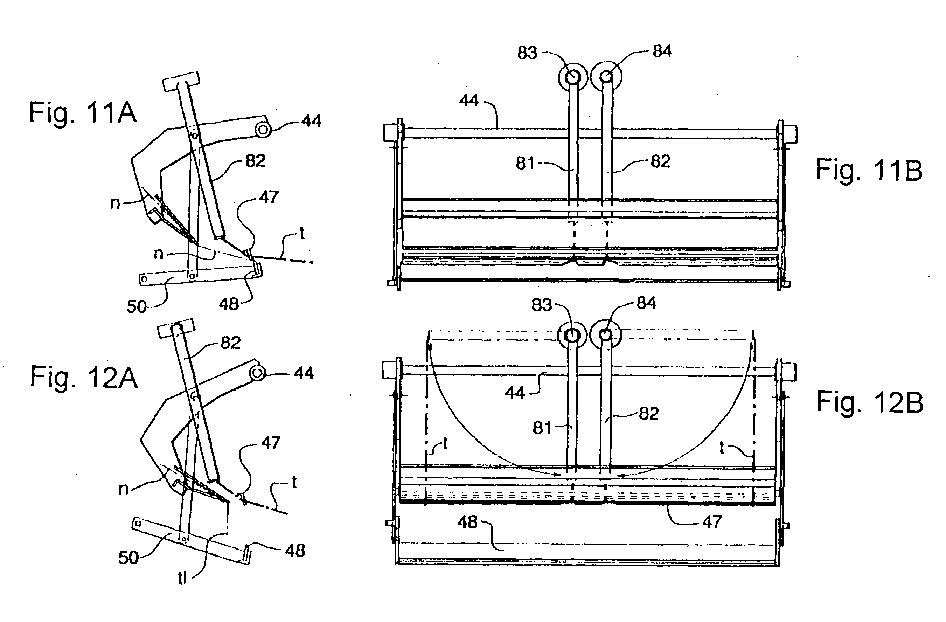

After a desired number of wraps have been applied, e.g., one and a half, net dispensing assembly 11 is withdrawn via an intermediate position (Figures 10A and 10B) by retraction of actuator element 54 causing frame members 43, 43' to rotate clockwise which in turn pulls severing assembly upwardly toward net n being dispensed along a path adjacent to shearbar 47. When the fully retracted position of Figures 11A and 11B is attained net n is severed by knife 48 which holds the end of the net tail tl against shear bar 47 as shown in Figure 2. Knife 48 does not cut twine t which is free to continue to pay out via notches 91, 92.

Now turning to the twine spiralling function, common to twine wrapping, it takes place immediately after the net is severed, saving valuable time in the overall wrapping operation. The net dispensing assembly moves to its intermediate position (Figures 12A and 12B) whereupon twine arms 81, 82 reciprocate along their arcuate paths in a conventional manner to spirally apply twine to the net wrapped bale. Knife 48 has been removed from shearbar 47 giving the twine a free traversal path along the shearbar, i.e., out of the notches.

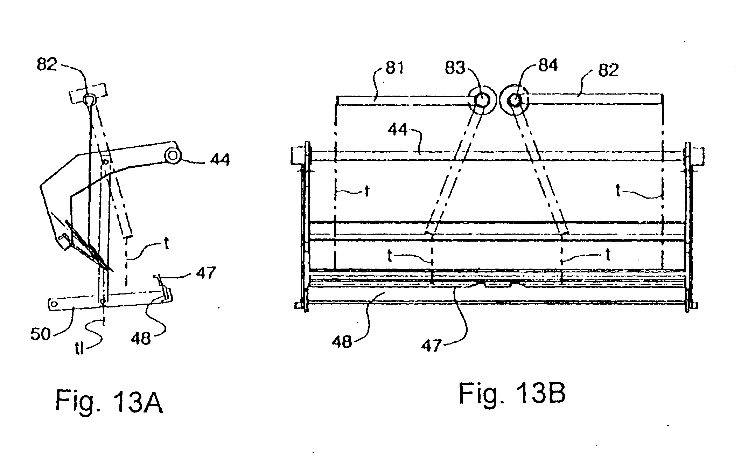

After an appropriate number of twine wraps have been applied, knife 48 is pulled against shearbar 47 to cut twine t. As shown in Figure 13B the twine may be anywhere along the shearbar with the exception of the notches. For example, the twine tails would extend the distance shown in Figure 13A under conditions where the twine was cut with the twine tubes in the phantom position shown in Figure 13B. Twine arms 81, 82 then return to home position, illustrated in solid lines in Figure 13B, and the net dispensing assembly returns to its fully retracted position shown in Figure 7A, as discussed above, returning knife 48 to its severing position, by virtue of coupling link 52.

In summary, included among the advantages, explicit and implicit, of the apparatus and method described herein is the provision of means that enhance operation due to simultaneous net and twine wrapping. Additionally, a severing step provides net cutting while twine is being dispensed which significantly contributes to reduction of time requirements for completing the baling operation. More particularly, when net and twine are being applied concurrently there is an improvement in time requirements in that the dual simultaneous operation eliminates the need for completing the net wrap sequence of steps before commencing twine wrapping, i.e., net and twine operations overlap resulting in attendant valuable time savings.

Thus is provided a round baler with overall enhanced operation due to the incorporation of wrapping apparatus comprising a net dispensing assembly, a twine dispensing assembly, and a severing assembly, all three of which cooperate in a manner that provides separate or concurrent twine/net wrapping with minimal time requirements.

While the preferred structure, in which the principles of the present invention are carried out, is shown and described above, it is to be understood that the invention is not to be limited to the particular details, as shown and described above, but that, in fact, widely different means may be employed in the practice of the broader aspects of the invention. For example, the method of the invention can be carried out for a combination wrap of plastic film and twine.

## Claims

1. A method for forming crop material into cylindrical bales (B), comprising the steps of:
feeding crop material into a bale forming chamber having a transverse inlet (25);
forming said crop material fed to said chamber through said inlet (25) into a compacted cylindrical package in said chamber;
supplying continuous sheet of wrapping material (n);
dispensing said sheet into said chamber, wrapping said sheet around the periphery of said cylindrical package to completely encase said compacted crop material; and
supplying twine (t), dispensing said twine (t) into said chamber, wrapping said twine (t) around the periphery of said cylindrical package of compacted crop material to form a round bale (B),
said method being characterized in that, during at least a portion of said sheet dispensing step, twine (t) is dispensed into said chamber concurrently with said sheet of wrapping material (n).

2. A method according to claim 1, characterized in that it comprises the further step of:
cutting said sheet of wrapping material (n) while said twine (t) continues to be dispensed into said chamber.

3. A method according to claim 1 or 2, characterized in that it comprises the further step of:
cutting said twine (t) subsequent to cutting said sheet of wrapping material (n).

4. A method according to claim 3, characterized in that cutting said twine (t) and cutting said sheet of wrapping material (n) are accomplished by the same severing means (12).

5. A method according to claim 4, characterized in that said severing means (12) comprise a transverse knife (48) for severing said sheet of wrapping material (n) and said twine (t) and a transverse shear bar (47) including a shearing edge.

6. A method according to claim 5, characterized in that said shear bar (47) includes at least one indentation (91, 92) and said transverse knife (48) cuts said sheet of wrapping material (n) while said twine (t) is dispensed through said indentation (91, 92) into said chamber.

7. A method according to any of the preceding claims, characterized in that said sheet of wrapping material comprises net (n).

8. A round baler (10) for forming crop material into cylindrical bales (B), said baler (10) comprising:
a main frame (14) including opposing side walls (17, 17');
means (26, 27, 28) defining a bale forming chamber with a transverse inlet (25), said defining means including an apron assembly (28) comprising crop engaging means (33), disposed between said side walls (17, 17'):
means (23) for feeding crop material to said chamber through said inlet (25) whereby said crop material accumulated in said chamber is engaged by said crop engaging means (33) to form said crop material into a compacted cylindrical package in said chamber;
a supply (13) of continuous sheet of wrapping material (n);
a dispensing assembly (11), including insertion means (43-46), for selectively dispensing said sheet of wrapping material (n) into said chamber for wrapping the periphery of said cylindrical package of crop material to form a round bale (B) of crop material;
a supply of twine (t); and
a twine dispensing assembly (9) for selectively dispensing said twine (t) into said chamber for wrapping the periphery of said cylindrical package of crop material to form a round bale (B) of crop material;
said round baler (10) being characterized in that said twine dispensing assembly (9) is operable to dispense twine (t) into said chamber concurrently with said sheet of wrapping material (n).

9. A round baler according to claim 8, characterized in that it comprises means (12) for severing said sheet of wrapping material (n) under conditions where said twine (t) is being dispensed into said chamber.

10. A round baler according to claim 9, characterized in that said severing means (12) comprise a transverse knife (48) for severing said sheet of wrapping material (n) after a predetermined amount has been dispensed about the peripheral surface of said compacted cylindrical package of crop material.

11. A round baler according to claim 10, characterized in that said severing means (12) further comprise:
a transverse shear bar (47) including a shearing edge; and
means (53, 55, 44, 43, 52, 50) for moving said knife (48) into cooperative engagement with said shearing edge of said shear bar (47) for severing said sheet of wrapping material (n).

12. A round baler according to claim 11, characterized in that said severing means (12) further comprise means (51, 50, 49) for mounting said means for moving said knife (48) on said main frame (14) to pivot about a fixed pivot (51) for moving said knife (48) into said cooperative engagement with said shearing edge of said shear bar (47) to sever said sheet of wrapping material (n).

13. A round baler according to claim 11 or 12, characterized in that:
said shear bar (47) includes at least one indentation (91, 92); and
said twine dispensing assembly (9) includes means (81, 82) for guiding said twine (t) through said at least one indentation (91, 92) under conditions where said knife (48) is moved into cooperation with said shearing edge to severe said sheet of wrapping material (n).

14. A round baler according to claim 13, characterized in that:
said indentation (91, 92) comprises an interruption of said shearing edge; and
said means (81, 82) for guiding said twine (t) is mounted to guide said twine (t) over the non-interrupted portion of said edge of said shear bar (47) under subsequent conditions where said knife (48) is moved into cooperation with said shearing edge to cut said twine (t).

15. A round baler according to claim 13 or 14, characterized in that said at least one indentation comprises a notch (91/92) in said shear bar edge to receive said twine (t).

16. A round baler according to any of the claims 8 to 15, characterized in that said twine dispensing assembly (9) includes first means (81, 83, 90) and second means (82, 84, 88) for dispensing first and second strands of twine (t).

17. A round baler according to claim 16, when appended to any of the claims 13 to 15, characterized in that:
said shear bar (47) includes at least two indentations (91, 92); and
said twine dispensing assembly (9) includes means (81, 82) for guiding said first and second strands of twine (t) through said at least two indentations (91, 92) under conditions where said knife (48) is moved into cooperation with said shear edge to cut said sheet of wrapping material (n).

18. A round baler (10) according to claim 8, characterized in that:
said defining means (26, 27, 28) define a bale forming chamber having a fixed, generally cylindrical shape;
said baler comprises means (31, 32) for supporting the apron assembly (28) of said defining means on said main frame (14) and means (36, 40) for moving the crop engaging means of the apron assembly along a path (31, 32) contiguous with at least a major portion of the fixed periphery of said cylindrical chamber in order to engage the crop material fed into said chamber by said feeding means (23) under conditions where said crop engaging means (33) are moving along a portion of said periphery and to form it into a compacted cylindrical package when a sufficient amount of crop material has accumulated in said chamber;
said insertion means (43-46) of said dispensing assembly (11) include grasping means (45, 46) for transversely engaging said sheet of wrapping material (n); and
said baler further comprises means (44,62) for mounting said dispensing assembly (11) on said main frame (14) to pivot about a fixed pivot (62) for moving said grasping means (45, 46) of said insertion means (43-46) between a retracted position remote from said cylindrical chamber and an extended position adjacent said cylindrical chamber for dispensing said sheet of wrapping material (n) between the peripheral surface of said compacted cylindrical package of crop material and said crop engaging means (33).

19. A round baler according to any of the claims 8 to 18, characterized in that it further comprises severing means (12) including cutting means (47, 48) for severing said sheet of wrapping material (n) after a predetermined amount has been dispensed about the peripheral surface of said compacted cylindrical package of crop material.

20. A round baler according to claim 19, characterized in that it comprises means (51, 51') for mounting said severing means (12) on said main frame (14) to pivot about a fixed pivot (51) for moving said cutting means (48) into said sheet of wrapping material (n) under conditions where said dispensing assembly (11) has moved said insertion means (43-46) to the retracted position remote from said chamber and said sheet of wrapping material (n) continues to be dispensed from said insertion means (43-46) along an intermediate path to said chamber.

21. A round baler according to claim 20, characterized in that said cutting means (47, 48), comprise
a transverse knife edge (48) disposed on one side of said intermediate path of said sheet of wrapping material (n) under conditions where said insertion means (43-46) is in said retracted position, and
a shear bar (47) mounted on the other side of said intermediate path of said sheet of wrapping material (n), said shear bar (47) including a shearing edge disposed to cooperate with said knife edge (48) when said cutting means (48) is moved into said sheet of wrapping material (n).

22. A round baler according to claim 21, characterized in that it further comprises coupling means (52, 52') between said dispensing assembly (11) and said severing means (12) for preventing said cutting means (48) from moving into said sheet of wrapping material (n) under conditions where said insertion means (43-46) is in the extended position adjacent said chamber.

23. A round baler according to any of the claims 18 to 22, characterized in that:
said supply (13) of wrapping material (n) comprises a tube and a continuous sheet of wrapping material (n) coiled on said tube with a free end (tl) issuing from the outer surface thereof; and
drag means (65-67) operatively associated with said supply (13) are provided to vary the force necessary to dispense said sheet of wrapping material (n) from said tube.

24. A round baler according to claim 23, characterized in that it further comprises linkage means (56-64) between said drag means (65-67) and said dispensing assembly (11) for activating said drag under conditions where said grasping means (45, 46) is in the retracted position remote from said chamber.

25. A round baler according to any of the claims 19 to 24, when appended to claim 18, characterized in that:
said apron assembly (28) comprises a plurality of crop engaging transverse slats (33) and a pair of opposed mounting chains (30) between which said slats (33) extend in an equidistant adjacent manner;
said supporting means comprise means (31, 32) on said side wall (17, 17') for mounting said chains (30) for traversal along opposing continuous loops whereby said slats (33) travel along said path (31, 32); and
said means (26, 27, 28) defining a bale forming chamber further comprise a roll (27) having an aggressive outer surface, said roll (27) being mounted on said main frame (14) adjacent said continuous loops of said chains, such that said aggressive surface of said roll (27) is generally tangent with said fixed periphery of said cylindrical chamber; and
said mounting means (44, 62) for said dispensing assembly (11) allows movement of said grasping means (45, 46) inbetween said roll (27) and said path (31, 32) for dispensing said sheet of wrapping material (n).

26. A round baler according to claim 25, characterized in that said means (26, 27, 28) defining a bale forming chamber further comprise a floor roll (26), having an aggressive outer surface and being mounted for rotation on said main frame (14) adjacent said continuous loops of said chains (30), such that said aggressive surface of said floor roll (30) is generally tangent with said fixed periphery of said cylindrical chamber, said roll (27) and said floor roll (26) defining said transverse inlet (25).

## Patentansprüche

1. Verfahren zur Formung von Erntematerial zu Rundballen (B), mit den folgenden Schritten:
Zuführen von Erntematerial in eine Ballenformungskammer mit einem sich in Querrichtung erstreckenden Einlaß (25),
Formen des der Kammer über den Einlaß (25) zugeführten Erntematerials zu einem verdichteten zylindrischen Packen in der Kammer,
Zuführen einer kontinuierlichen Bahn aus Umwicklungsmaterial (n),
Abgabe der Bahn in die Kammer, Wickeln der Bahn um den Umfang des zylindrischen Packens, um das verdichtete Erntematerial vollständig zu umschließen, und
Zuführen von Bindegarn (t), Abgeben des Bindegarns (t) in die Kammer, Wickeln des Bindegarns (t) um den Umfang des zylindrischen Packens aus verdichtetem Erntematerial zur Bildung eines Rundballens (b),
wobei das Verfahren dadurch gekennzeichnet ist, daß zumindest während eines Teils des Bahnabgabeschrittes Bindegarn (t) in die Kammer gleichzeitig mit der Bahn aus Umwicklungsmaterial (n) abgegeben wird.

2. Verfahren nach Anspruch 1, dadurch gekennzeichnet, daß es den weiteren Schritt des:
Schneidens der Bahn aus Umwicklungsmaterial (n) umfaßt, während das Bindegarn (t) weiter in die Kammer abgegeben wird.

3. Verfahren nach Anspruch 1 oder 2, dadurch gekennzeichnet, daß es den weiteren Schritt des:
Schneidens des Bindegarns (t) nach dem Schneiden der Bahn aus Umwicklungsmaterial (n) umfaßt.

4. Verfahren nach Anspruch 3, dadurch gekennzeichnet, daß das Schneiden des Bindegarns (t) und das Schneiden der Bahn aus Umwicklungsmaterial (n) durch die gleiche Abtrenneinrichtung (12) durchgeführt wird.

5. Verfahren nach Anspruch 4, dadurch gekennzeichnet, daß die Abtrenneinrichtung (12) ein sich in Querrichtung erstreckendes Messer (48) zum Abtrennen der Bahn aus Umwicklungsmaterial (n) und des Bindegarns (t) und eine sich in Querrichtung erstreckende Gegenschneide (47) aufweist, die eine Schneidkante einschließt.

6. Verfahren nach Anspruch 5, dadurch gekennzeichnet, daß die Gegenschneide (47) zumindest eine Einkerbung (91, 92) einschließt, und daß das sich in Querrichtung erstreckende Messer (48) die Bahn aus Umwicklungsmaterial (n) schneidet, während das Bindegarn (t) durch die Einkerbung (91, 92) in die Kammer abgegeben wird.

7. Verfahren nach einem der vorhergehenden Ansprüche, dadurch gekennzeichnet, daß die Bahn aus Umwicklungsmaterial Netzmaterial (n) umfaßt.

8. Rundballenpresse (10) zur Formung von Erntematerial zu zylindrischen Ballen (B), wobei die Ballenpresse (10) folgendes umfaßt:
einen Hauptrahmen (14), der gegenüberliegende Seitenwände (17, 17') einschließt,
Einrichtungen (26, 27, 28), die eine Ballenformungskammer mit einem querverlaufenden Einlaß (25) umgrenzen, wobei die Umgrenzungseinrichtungen eine Umschlingungsbaugruppe (28) mit mit dem Erntematerial in Eingriff kommenden Einrichtungen (33) einschließen, die zwischen den Seitenwänden (17, 17') angeordnet ist,
Einrichtungen (23) zum Zuführen von Erntematerial an die Kammer durch den Einlaß (25) hindurch, wobei das in der Kammer angesammelte Erntematerial mit den mit dem Erntematerial in Eingriff kommenden Einrichtungen (33) in Eingriff kommt, um das Erntematerial in der Kammer zu einem verdichteten zylindrischen Packen zu formen,
einen Vorrat (13) einer kontinuierlichen Bahn aus Umwicklungsmaterial (n),
eine Abgabebaugruppe (11), die Einführungseinrichtungen (43-46) einschließt, um selektiv die Bahn aus Umwicklungsmaterial (n) in die Kammer einzuführen, um den Umfang des zylindrischen Packens aus Erntematerial zu umwickeln, um einen Rundballen (B) aus Erntematerial zu formen,
einen Vorrat an Bindegarn (t), und
eine Bindegarn-Abgabebaugruppe (9) zum selektiven Abgeben des Bindegarns (t) in die Kammer zum Umwickeln des Umfanges des zylindrischen Packens aus Erntematerial zur Bildung eines Rundballens (B) aus Erntematerial,
wobei die Rundballenpresse (10) dadurch gekennzeichnet ist, daß die Bindegarn-Abgabebaugruppe (9) betreibbar ist, um Bindegarn (t) in die Kammer gleichzeitig mit der Bahn aus Umwicklungsmaterial (n) abzugeben.

9. Rundballenpresse, nach Anspruch 8, dadurch gekennzeichnet, daß sie Einrichtungen (12) zum Abtrennen der Bahn aus Umwicklungsmaterial (n) unter Bedingungen umfaßt, unter denen das Bindegarn (t) in die Kammer abgegeben wird.

10. Rundballenpresse nach Anspruch 9, dadurch gekennzeichnet, daß die Abtrenneinrichtungen (12) ein sich in Querrichtung erstreckendes Messer (48) zum Abtrennen der Bahn aus Umwicklungsmaterial (n) umfassen, nachdem eine vorgegebene Menge um die Umfangsoberfläche des verdichteten zylindrischen Packens aus Erntematerial abgegeben wurde.

11. Rundballenpresse nach Anspruch 10, dadurch gekennzeichnet, daß die Abtrenneinrichtungen (12) weiterhin folgendes umfassen:
eine sich in Querrichtung erstreckende Gegenschneide (47) mit einer Scherkante, und
Einrichtungen (53, 55, 44, 43, 52, 50) zum Bewegen des Messers (48) in zusammenwirkendem Eingriff mit der Scherkante der Gegenschneide (47) zum Abtrennen der Bahn aus Umwicklungsmaterial (n).

12. Rundballenpresse nach Anspruch 11, dadurch gekennzeichnet, daß die Abtrenneinrichtungen (12) weiterhin Einrichtungen (51, 50, 49) zur Befestigung der Einrichtungen zur Bewegung des Messers (48) auf dem Hauptrahmen (14) derart umfassen, daß sich ein Verschwenken um einen festen Schwenkpunkt (51) ergibt, um das Messer (48) in zusammenwirkendem Eingriff mit der Scherkante der Gegenschneide (47) zu bringen, um die Bahn aus Umwicklungsmaterial (n) abzutrennen.

13. Rundballenpresse nach Anspruch 11 oder 12, dadurch gekennzeichnet, daß:
die Gegenschneide (47) zumindest eine Einkerbung (91, 92) einschließt, und
die Bindegarn-Abgabebaugruppe (9) Einrichtungen (81, 82) zum Führen des Bindegarns (t) durch die zumindest eine Einkerbung (91, 92) unter Bedingungen einschließt, bei denen das Messer (48) in Zusammenwirken mit der Gegenschneide bewegt wird, um die Bahn aus Umwicklungsmaterial (n) abzutrennen.

14. Rundballenpresse nach Anspruch 13, dadurch gekennzeichnet, daß:
die Einkerbung (91, 92) eine Unterbrechung der Scherkante bildet, und
die Einrichtung (81, 82) zum Führen des Bindegarns (t) so befestigt ist, daß sie das Bindegarn (t) über den nicht unterbrochenen Abschnitt der Kante der Gegenschneide (47) bei nachfolgenden Bedingungen führt, bei denen das Messer (48) in Zusammenwirken mit der Gegenschneide bewegt wird, um das Bindegarn (t) zu schneiden.

15. Rundballenpresse nach Anspruch 13 oder 14, dadurch gekennzeichnet, daß die zumindest eine Einkerbung eine Kerbe (91/92) in der Gegenschneide zur Aufnahme des Bindegarns (t) umfaßt.

16. Rundballenpresse nach einem der Ansprüche 8-15, dadurch gekennzeichnet, daß die Bindegarn-Abgabebaugruppe (9) erste Einrichtungen (81, 83, 90) und zweite Einrichtungen (82, 84, 88) zur Abgabe erster und zweiter Stränge von Bindegarn (t) einschließt.

17. Rundballenpresse nach Anspruch 16 unter Rückbeziehung auf einen der Ansprüche 13-15, dadurch gekennzeichnet, daß:
die Gegenschneide (47) zumindest zwei Einkerbungen (91, 92) einschließt, und
die Bindegarn-Abgabebaugruppe (9) Einrichtungen (81, 82) zum Führen der ersten und zweiten Stränge aus Bindegarn (t) durch die zumindest zwei Einkerbungen (91, 92) unter Bedingungen einschließt, unter denen das Messer (48) im Zusammenwirken mit der Gegenschneide bewegt wird, um die Bahn aus Umwicklungsmaterial (n) zu schneiden.

18. Rundballenpresse (10) nach Anspruch 8, dadurch gekennzeichnet, daß:
die Umgrenzungseinrichtungen (26, 27, 28) eine Ballenformungskammer mit einer festen allgemein zylindrischen Form bilden,
die Ballenpresse Einrichtungen (31, 32) zur Halterung der Umschlingungsbaugruppe (28) der Umgrenzungseinrichtung auf dem Hauptrahmen (14) und Einrichtungen (36, 40) zur Bewegung der mit dem Erntematerial in Eingriff kommenden Einrichtungen der Umschlingungsbaugruppe entlang eines Pfades (31, 32) umfaßt, der an zumindest einen Hauptteil des festen Umfanges der zylindrischen Kammer angrenzt, um mit dem durch die Zuführungseinrichtung (23) in die Kammer eingespeisten Erntematerial unter Bedingungen in Eingriff zu kommen, unter denen sich die Erntematerial-Eingriffseinrichtungen (33) entlang eines Teils des Umfanges bewegen, um das Erntematerial zu einem verdichteten zylindrischen Packen zu bilden, wenn eine ausreichende Menge an Erntematerial in der Kammer angesammelt wurde,
die Einführungseinrichtungen (43-46) der Abgabebaugruppe (11), Greifeinrichtungen (45, 46) für einen Quereingriff mit der Bahn aus Umwicklungsmaterial (n) einschließen, und
die Ballenpresse weiterhin Einrichtungen (44, 62) zur Befestigung der Abgabebaugruppe (11) auf dem Hauptrahmen (14) für eine Verschwenkung um einen festen Schwenkpunkt (62) aufweist, um die Greifeinrichtungen (45, 46) der Einführungseinrichtungen (43-46) zwischen einer zurückgezogenen Stellung entfernt von der zylindrischen Kammer und einer ausgefahrenen Stellung benachbart zur zylindrischen Kammer zu bewegen, um die Bahn aus Umwicklungsmaterial (n) zwischen der Umfangsoberfläche des verdichteten zylindrischen Packens aus Erntematerial und der Erntematerial-Eingriffseinrichtung (33) abzugeben.

19. Rundballenpresse nach einem der Ansprüche 8-18, dadurch gekennzeichnet, daß sie weiterhin Abtrenneinrichtungen (12) einschließt, die Schneideinrichtungen (47, 48) zum Abtrennen der Bahn aus Umwicklungsmaterial (n) einschließen, nachdem eine vorgegebene Menge um die Umfangsoberfläche des verdichteten zylindrischen Packens aus Erntematerial abgegeben wurde.

20. Rundballenpresse nach Anspruch 19, dadurch gekennzeichnet, daß sie Einrichtungen (51, 51') zur Befestigung der Abtrenneinrichtung (12) auf dem Hauptrahmen (14) für ein Verschwenken um einen festen Schwenkpunkt (51) zur Bewegung der Schneideinrichtung (48) in die Bahn des Umwicklungsmaterials (n) unter Bedingungen aufweist, bei denen die Abgabebaugruppe (11) die Einführungseinrichtung (43-46) in die von der Kammer entfernte zurückgezogene Stellung bewegt hat und die Bahn aus Umwicklungsmaterial (n) weiter von der Einführungseinrichtung (43-46) entlang einer Zwischenbahn zu der Kammer abgegeben wird.

21. Rundballenpresse nach Anspruch 20, dadurch gekennzeichnet, daß die Schneideinrichtungen (47, 48) folgendes umfassen:
eine sich in Querrichtung erstreckende Messerkante (48), die auf einer Seite des Zwischenpfades der Bahn aus Umwicklungsmaterial (n) unter Bedingungen angeordnet ist, unter denen sich die Einführungseinrichtung (43-46) in der zurückgezogenen Stellung befindet, und
eine Gegenschneide (47), die auf der anderen Seite des Zwischenpfades der Bahn aus Umwicklungsmaterial (n) angeordnet ist, wobei die Gegenschneide (47) eine Scherkante einschließt, die zum Zusammenwirken mit der Messerkante (48) angeordnet ist, wenn die Schneideinrichtung (48) in die Bahn aus Umwicklungsmaterial (n) bewegt wird.

22. Rundballenpresse nach Anspruch 21, dadurch gekennzeichnet, daß sie weiterhin Kopplungseinrichtungen (52, 52') zwischen der Abgabebaugruppe (11) und der Abtrenneinrichtung (12) umfaßt, um zu verhindern, daß sich die Schneideinrichtungen (48) in die Umwicklungsmaterialbahn (n) unter Bedingungen bewegen, unter denen sich die Einführungseinrichtung (43-46) in der ausgefahrenen Stellung benachbart zu der Kammer befindet.

23. Rundballenpresse nach einem der Ansprüche 18-22, dadurch gekennzeichnet, daß der Vorrat (13) des Umwicklungsmaterials (n) ein Rohr und eine kontinuierliche Umwicklungsmaterialbahn (n) umfaßt, die auf das Rohr aufgewickelt ist, wobei ein freies Ende (tl) von deren Außenoberfläche austritt, und
Bremseinrichtungen (65-67), die betriebsmäßig dem Vorrat (13) zugeordnet sind, vorgesehen sind, um die Kraft zu ändern, die erforderlich ist, um die Umwicklungsmaterialbahn (n) von dem Rohr abzugeben.

24. Rundballenpresse nach Anspruch 23, dadurch gekennzeichnet, daß sie weiterhin Gestängeeinrichtungen (56-64) zwischen den Bremseinrichtungen (65-67) und der Abgabebaugruppe (11) aufweist, um die Bremsung unter Bedingungen zu aktivieren, unter denen die Greifeinrichtung (45, 46) sich in der von der Kammer entfernten zurückgezogenen Stellung befindet.

25. Rundballenpresse nach einem der Ansprüche 19-24 unter Rückbeziehung auf Anspruch 18, dadurch gekennzeichnet, daß:
die Umschlingungsbaugruppe (28) eine Vielzahl von mit dem Erntematerial in Eingriff kommenden, sich in Querrichtung erstreckenden Leisten (33) und zwei gegenüberliegende Befestigungsketten (30) umfaßt, zwischen denen sich die Leisten (33) benachbart zueinander und unter gleichen Abständen erstrecken,
die Halterungseinrichtungen Einrichtungen (31, 32) auf der Seitenwand (17, 17') zur Befestigung der Ketten (30) für einen Durchlauf von gegenüberliegenden kontinuierlichen Schleifen aufweisen, wodurch sich die Leisten (33) entlang des Pfades (31, 32) bewegen, und
die eine Ballenformungskammer umgrenzenden Einrichtungen (26, 27, 28) weiterhin eine Walze (27) aufweisen, die eine aggressive Außenoberfläche aufweist, wobei die Walze (27) auf dem Hauptrahmen (14) benachbart zu den kontinuierlichen Schleifen der Ketten derart befestigt ist, daß die aggressive Oberfläche der Walze (27) allgemein eine Tangente zu dem festen Umfang der zylindrischen Kammer bildet, und
die Befestigungseinrichtung (44, 62) für die Abgabebaugruppe (11) eine Bewegung der Greifeinrichtungen (45, 46) zwischen die Walze (47) und die Bahn (31, 32) ermöglicht, um die Umwicklungsmaterialbahn (n) abzugeben.

26. Rundballenpresse nach Anspruch 25, dadurch gekennzeichnet, daß die die Ballenformungskammer umgrenzenden Einrichtungen (26, 27, 28) weiterhin eine Bodenwalze (26) mit einer aggressiven Außenoberfläche umfassen, die für eine Drehung auf dem Hauptrahmen (14) benachbart zu den kontinuierlichen Schleifen der Ketten (30) derart befestigt ist, daß die aggressive Oberfläche der Bodenwalze (30) allgemein eine Tangente zu dem festen Umfang der zylindrischen Kammer bildet, wobei die Walze (27) und die Bodenwalze (26) den sich in Querrichtung erstreckenden Einlaß (25) begrenzen.

## Revendications

1. Méthode pour la mise en forme de matériau de récolte en bottes cylindriques (B), comprenant les étapes:
d'alimentation de matériau de récolte dans une chambre de bottelage possédant un orifice transversal d'entrée (25);
de formation dudit matériau de récolte alimenté vers ladite chambre au travers dudit orifice d'entrée (25) en une balle cylindrique compactée dans ladite chambre;
d'alimentation d'une feuille continue de matériau d'enveloppement (n);
de distribution de ladite feuille dans la chambre, d'enveloppement de ladite feuille autour de la périphérie de ladite balle cylindrique afin d'enrober complètement ledit matériau de récolte compacté; et
d'alimentation de ficelle (t), de distribution de ladite ficelle (t) dans ladite chambre, d'enroulement de ladite ficelle (t) autour de la périphérie de ladite balle cylindrique de matériau de récolte compacté afin de former une botte ronde (B);
ladite méthode étant caractérisée en ce que, pendant au moins une partie de ladite étape de distribution de feuille, de la ficelle (t) est distribuée dans ladite chambre simultanément avec ladite feuille de matériau d'enveloppement (n).

2. Méthode selon la revendication 1, caractérisée en ce qu'elle comprend l'étape supplémentaire de:
coupe de ladite feuille de matériau d'enveloppement (n) tandis que ladite ficelle (t) continue à être distribuée dans ladite chambre.

3. Méthode selon la revendication 1 ou 2, caractérisée en ce qu'elle comprend l'étape supplémentaire de:
coupe de ladite ficelle (t) après la coupe de ladite feuille de matériau d'enveloppement (n).

4. Méthode selon la revendication 3, caractérisée en ce que la coupe de ladite ficelle (t) et la coupe de ladite feuille de matériau d'enveloppement (n) sont accomplies par les mêmes moyens de sectionnement (12).

5. Méthode selon la revendication 4, caractérisée en ce que lesdits moyens de sectionnement (12) comprennent un couteau transversal (48) pour couper ladite feuille de matériau d'enveloppement (n) et ladite ficelle (t), et une barre transversale de cisaillement (47) comprenant une arête de cisaillement.

6. Méthode selon la revendication 5, caractérisée en ce que ladite barre de cisaillement (47) comprend une au moins unique indentation (91, 92) et que ledit couteau transversal (48) coupe ladite feuille de matériau d'enveloppement (n) tandis que ladite ficelle (t) est distribuée au travers de ladite indentation (91, 92) dans ladite chambre.

7. Méthode selon l'une quelconque des revendications précédentes, caractérisée en ce que ladite feuille de matériau d'enveloppement comprend un filet (n).

8. Ramasseuse-presse ronde (10) pour la formation de matériau de récolte en botte cylindrique (B), ladite ramasseuse-presse (10) comprenant:
un châssis principal (14) avec des parois latérales (17, 17');
des moyens (26, 27, 28) définissant une chambre de bottelage avec un orifice transversal d'entrée (25), lesdits moyens de définition incluant un ensemble de tablier (28) comprenant des moyens d'engagement de matériau de récolte (33), disposés entre lesdites parois latérales (17, 17');
des moyens (23) d'alimentation du matériau de récolte dans ladite chambre (25) au travers dudit orifice d'entrée de sorte que ledit matériau de récolte accumulé dans la chambre soit engagé par lesdits moyens d'engagement de matériau de récolte (33) afin de transformer ledit matériau de récolte en une balle cylindrique compactée dans ladite chambre;
une alimentation (13) d'une feuille continue de matériau d'enveloppement (n);
un assemblage de distribution (11), comprenant des moyens d'insertion (43-46) afin de distribuer sélectivement ladite feuille de matériau d'enveloppement (n) dans ladite chambre pour envelopper la périphérie de ladite balle cylindrique de matériau de récolte pour constituer une botte ronde (B) de matériau de récolte;
une alimentation de ficelle (t); et
un assemblage de distribution de ficelle (9) afin de distribuer sélectivement ladite ficelle (t) dans ladite chambre pour enrouler la périphérie de ladite balle cylindrique (B) de matériau de récolte en vue de constituer une botte ronde de matériau de récolte;
ladite ramasseuse-presse (10) ronde étant caractérisée en ce que la fonction dudit assemblage de distribution de ficelle (9) est de distribuer de la ficelle (t) dans ladite chambre simultanément avec ladite feuille de matériau d'enveloppement (n).

9. Ramasseuse-presse ronde selon la revendication 8, caractérisée en ce qu'elle comprend des moyens (12) de sectionnement de ladite feuille de matériau d'enveloppement (n) dans la condition où ladite ficelle (t) est en cours de distribution dans ladite chambre.

10. Ramasseuse-presse ronde selon la revendication 9, caractérisée en ce que lesdits moyens de sectionnement (12) comprennent un couteau transversal (48) pour couper ladite feuille de matériau d'enveloppement (n) après la distribution d'une quantité prédéterminée autour de la surface périphérique de ladite balle cylindrique compactée de matériau de récolte.

11. Ramasseuse-presse ronde selon la revendication 10, caractérisée en ce que lesdits moyens de sectionnement (12) comprennent en outre:
une barre transversale de cisaillement (47) incluant une arête de cisaillement; et
des moyens (53, 55, 44, 43, 52, 50) de déplacement dudit couteau (48) en engagement associé avec ladite arête de cisaillement de ladite barre de cisaillement (47) pour couper ladite feuille de matériau d'enveloppement (n).

12. Ramasseuse-presse ronde selon la revendication 11, caractérisée en ce que lesdits moyens de sectionnement (12) comprennent en outre des moyens (51, 50, 49) de montage desdits moyens de déplacement dudit couteau (48) sur ledit châssis principal (14) afin de pivoter autour d'un pivot fixe (51) pour déplacer ledit couteau (48) dans ledit engagement associé avec ladite arête de cisaillement de ladite barre de cisaillement (47) afin de couper ladite feuille de matériau d'enveloppement (n).

13. Ramasseuse-presse ronde selon la revendication 11 ou 12, caractérisée en ce que:
ladite barre de cisaillement (47) comprend une au moins unique indentation (91, 92); et
ledit assemblage de distribution de ficelle (9) comprend des moyens (81, 82) pour guider ladite ficelle (t) au travers de ladite au moins unique indentation (91, 92) dans la condition où ledit couteau (48) est déplacé en association avec ladite arête de cisaillement pour couper ladite feuille de matériau d'enveloppement (n).

14. Ramasseuse-presse ronde selon la revendication 13, caractérisée en ce que:
ladite indentation (91, 92) comprend une interruption de ladite arête de cisaillement; et
lesdits moyens (81, 82) de guidage de ladite ficelle (t) sont montés pour guider ladite ficelle (t) sur une partie non interrompue de ladite arête de ladite barre de cisaillement (47) dans la condition ultérieure où ledit couteau (48) est déplacé en association avec ladite arête de cisaillement pour couper ladite ficelle (t).

15. Ramasseuse-presse ronde selon la revendication 13 ou 14, caractérisée en ce que ladite au moins unique indentation comprend une encoche (91/92) dans ladite arête de barre de cisaillement afin de recevoir ladite ficelle (t).

16. Ramasseuse-presse ronde selon l'une quelconque des revendications 8 à 15, caractérisée en ce que ledit assemblage de distribution de ficelle (9) comprend des premiers moyens (81, 83, 90) et des seconds moyens (82, 84, 88) de distribution d'un premier et d'un second brins de ficelle (t).

17. Ramasseuse-presse ronde selon la revendication 16, lorsqu'elle se rapporte à l'une quelconque des revendications 13 à 15, caractérisée en ce que:
ladite barre de cisaillement (47) comprend au moins deux indentations (91, 92); et
ledit assemblage de distribution de ficelle (9) comprend des moyens (81, 82) de guidage desdits premier et second brins de ficelle (t) au travers desdites au moins deux indentations (91, 92) dans la condition où ledit couteau (48) est déplacé en association avec ladite arête de cisaillement pour couper ladite feuille de matériau d'enveloppement (n).

18. Ramasseuse-presse ronde (10) selon la revendication 8, caractérisée en ce que:
lesdits moyens de définition (26, 27, 28) définissent une chambre de bottelage possédant une forme générale cylindrique fixe;
lesdits moyens de ramasseuse-presse comprennent des moyens (31, 32) d'ensemble de tablier (28) appartenant auxdits moyens de définition de support sur ledit châssis principal (14), et des moyens (36, 40) de déplacement des moyens d'engagement de matériau de récolte de l'ensemble de tablier le long d'un trajet (31, 32) adjacent avec au moins une majeure partie de la périphérie fixe de ladite chambre cylindrique afin d'engager le matériau de récolte alimenté dans ladite chambre à l'aide desdits moyens d'alimentation (23) dans la condition où lesdits moyens d'engagement de matériau de récolte (33) se déplacent le long d'une partie de ladite périphérie, et afin de le mettre en forme en une balle cylindrique compactée lorsqu'une quantité suffisante de matériau de récolte a été accumulée dans ladite chambre;
lesdits moyens d'insertion (43-46) dudit assemblage de distribution (11) comprennent des moyens de préhension (45, 46) pour engager transversalement ladite feuille de matériau d'enveloppement (n); et
ladite ramasseuse-presse comprend en outre des moyens (44,62) pour monter ledit assemblage de distribution (11) sur ledit châssis principal (14) afin de pivoter autour d'un pivot fixe (62) pour déplacer lesdits moyens de préhension (45, 46) desdits moyens d'insertion (43-46) entre une position rétractée distante de ladite chambre cylindrique et une position en extension adjacente à ladite chambre cylindrique pour distribuer ladite feuille de matériau d'enveloppement (n) entre la surface périphérique de ladite balle cylindrique compactée de matériau de récolte et lesdits moyens d'engagement de matériau de récolte (33).

19. Ramasseuse-presse ronde selon l'une quelconque des revendications 8 à 18, caractérisée en ce qu'elle comprend en outre des moyens de sectionnement (12) incluant des moyens de coupe (47, 48) pour sectionner ladite feuille de matériau d'enveloppement (n) après la distribution d'une quantité prédéterminée autour de la surface de ladite balle cylindrique compactée de matériau de récolte.

20. Ramasseuse-presse ronde selon la revendication 19, caractérisée en ce qu'elle comprend des moyens (51, 51') pour monter lesdits moyens de sectionnement (12) sur ledit châssis principal (14) afin de pivoter autour d'un pivot fixe (51) pour déplacer lesdits moyens de coupe (48) dans ladite feuille de matériau d'enveloppement (n) dans la condition où ledit assemblage de distribution (11) a déplacé lesdits moyens d'insertion (43-46) vers la position rétractée distante de ladite chambre et que ladite feuille de matériau d'enveloppement (n) continue à être distribuée depuis lesdits moyens d'insertion (43-46) le long d'un trajet intermédiaire vers ladite chambre.

21. Ramasseuse-presse ronde selon la revendication 20, caractérisée en ce que lesdits moyens de coupe (47, 48), comprennent
une arête transversale de couteau (48) disposée d'un côté dudit trajet intermédiaire de ladite feuille de matériau d'enveloppement (n) dans la condition où lesdits moyens d'insertion (43-46) se trouvent dans ladite position rétractée, et
une barre de cisaillement (47) montée de l'autre côté dudit trajet intermédiaire de ladite feuille de matériau d'enveloppement (n), ladite barre de cisaillement (47) comprenant une arête de cisaillement disposée pour s'associer avec ladite arête de couteau (48) lorsque lesdits moyens de coupe (48) sont déplacés dans ladite feuille de matériau d'enveloppement (n).

22. Ramasseuse-presse ronde selon la revendication 21, caractérisée en ce qu'elle comprend en outre des moyens d'accouplement (52, 52') entre ledit assemblage de distribution (11) et lesdits moyens de sectionnement (12) pour éviter que lesdits moyens de coupe (48) ne se déplacent dans ladite feuille de matériau d'enveloppement (n) dans la condition où lesdits moyens d'insertion (43-46) se trouvent en position d'extension adjacente de ladite chambre.

23. Ramasseuse-presse ronde selon l'une quelconque des revendications 18 à 22, caractérisée en ce que:
ladite alimentation (13) de matériau d'enveloppement (n) comprend un tube et une feuille continue de matériau de récolte (n) enroulée sur ledit tube avec une extrémité libre (tl) issue de sa surface extérieure; et
des moyens de patin (65-67) associés fonctionnellement avec ladite alimentation (13) sont prévus pour faire varier la force nécessaire à la distribution de ladite feuille de matériau d'enveloppement (n) à partir dudit tube.

24. Ramasseuse-presse ronde selon la revendication 23, caractérisée en ce qu'elle comprend en outre des moyens de liaison (56-64) entre lesdits moyens de patin (65-67) et ledit assemblage de distribution (11) afin d'activer ledit moyen de patin dans la condition où lesdits moyens de préhension (45, 46) se trouvent dans la position rétractée distante de ladite chambre.

25. Ramasseuse-presse ronde selon l'une quelconque des revendications 19 à 24, lorsqu'elle se rapporte à la revendication 18, caractérisée en ce que:
ledit ensemble de tablier (28) comprend une pluralité de lattes transversales (33) d'engagement de matériau de récolte et une paire de chaînes opposées (30) de montage entre lesquelles lesdites lattes (33) s'étendent de façon adjacente et équidistante;
lesdits moyens de support comprennent des moyens (31, 32) situés sur ladite paroi latérale (17, 17') pour monter lesdites chaînes (30) de manière à se déplacer le long de boucles continues opposées, de sorte que lesdites lattes (33) se déplacent le long dudit trajet (31, 32); et
lesdits moyens (26, 27, 28) définissant une chambre de bottelage comprennent en outre un rouleau (27) possédant une surface extérieure accrocheuse, ledit rouleau (27) étant monté sur ledit châssis principal (14) à proximité desdites boucles continues desdites chaînes, de telle sorte que ladite surface accrocheuse dudit rouleau (27) soit généralement tangente à ladite périphérie de ladite chambre cylindrique; et
lesdits moyens de montage (44, 62) dudit assemblage de distribution (11) permettent le mouvement desdits moyens de préhension (45, 46) entre ledit rouleau (27) et ledit trajet (31, 32) pour distribuer ladite feuille de matériau d'enveloppement (n).

26. Ramasseuse-presse ronde selon la revendication 25, caractérisée en ce que lesdits moyens (26, 27, 28) définissant une chambre de bottelage comprennent en outre un rouleau de base (26), possédant une surface extérieure accrocheuse et monté rotativement sur ledit châssis principal (14) à proximité desdites boucles continues desdites chaînes (30), de telle sorte que ladite surface accrocheuse dudit rouleau de base (26) est généralement tangente à ladite périphérie fixe de ladite chambre cylindrique, ledit rouleau (27) et ledit rouleau de base (26) définissant ledit orifice transversal d'entrée (25).
